**Europäisches Patentamt**

**European Patent Office**

**Office européen des brevets**

(11) Veröffentlichungsnummer: **0 042 110**
A1

(12) ## EUROPÄISCHE PATENTANMELDUNG

(21) Anmeldenummer: **81104279.5**

(51) Int. Cl.³: **G 01 S 13/02, B 61 L 25/04**

(22) Anmeldetag: **03.06.81**

(30) Priorität: **16.06.80 DE 3022524**

(43) Veröffentlichungstag der Anmeldung: **23.12.81**
**Patentblatt 81/51**

(84) Benannte Vertragsstaaten: **DE FR GB IT NL**

(71) Anmelder: **SIEMENS AKTIENGESELLSCHAFT Berlin und München, Postfach 22 02 61, D-8000 München 22 (DE)**

(72) Erfinder: **Edinger, Egon, Fried.-Bach-Strasse 69, D-8032 Gräfelfing (DE)**
Erfinder: **Egger, Walter, Schloss-Berg-Strasse 21, D-8000 München 90 (DE)**
Erfinder: **Pedall, Friedrich, Johann-Clanze-Strasse 53, D-8000 München 71 (DE)**

(54) **Antwortgerät für ein System zum selbsttätigen drahtlosen Übertragen von mehrstelligen numerischen Informationen zwischen gegeneinander bewegbaren aktiven Abfragegeräten und passiven Antwortgeräten.**

(57) Die Abstimmung der an einen Hochfrequenzleitungs-abschnitt (5) Rechteckhohlleiter) angekoppelten Resonatoren (1) (Koaxialresonatoren) aus weichem Aluminium erfolgt durch teilweise Verformung des Resonatorbodens (3), durch Verformung der Seitenwand und/oder der Innenleiter (2). Die Resonatoren sind in einem Fließpreßverfahren hergestellt.

— Resonatorform vor Abgleich
——— Resonatorform nach Abgleich

SIEMENS AKTIENGESELLSCHAFT         Unser Zeichen
Berlin und München        - 1 -        VPA   80 P 7 0 8 8 E

Antwortgerät für ein System zum selbsttätigen drahtlosen Übertragen von mehrstelligen numerischen Informationen zwischen gegeneinander bewegbaren aktiven Abfragegeräten und passiven Antwortgeräten.

Das Hauptpatent bezieht sich auf ein Antwortgerät für ein System zum selbsttätigen drahtlosen Übertragen von mehrstelligen numerischen Informationen zwischen gegeneinander bewegbaren aktiven Abfrage- und passiven Antwortgeräten, insbesondere für spurgebundene Transportmittel, bei der jedes Antwortgerät eine der Stellenzahl der zu übertragenden Information proportionale Anzahl von an einen Hochfrequenzleitungsabschnitt angekoppelten Resonatoren aufweist, die einzeln in formschlüssige Aufnahmen des Hochfrequenzleitungsabschnitts eingesetzt sind und deren unterschiedliche Resonanzfrequenz unter Wahrung eines gegenseitigen Mindestabstandes den Wobbelbereich für das vom Abfragegerät periodisch in seiner Frequenz veränderte abgestrahlte und nach Reflektion am Antwortgerät wieder empfangene Abfragesignal bestimmt.

Das dem Hauptpatent zugrundeliegende Problem besteht darin, für eine derart beschriebene Anordnung eine Lösung anzugeben, die eine einfache Abstimmung der Resonatoren des Antwortgerätes ermöglicht.

Diese Aufgabe wird gemäß dem Hauptpatent dadurch gelöst, daß der Resonatorboden der Resonatoren, beispielsweise Koaxialresonatoren, über eine äußere Krafteinwirkung in axialer Richtung nach innen oder außen verformbar ist.

Der vorliegenden Erfindung liegt eine Weiterbildung der

Wed 1 Plr/10.6.1980

0042110
80 P 7088 E

im Hauptpatent beschriebenen und dargestellten Anordnung zugrunde. Die Lösung der vorliegenden Erfindung besteht darin, daß der Resonatorboden partiell (buckelförmig oder als Kreisring) nach innen oder außen verformt wird. Auf diese Weise ist eine besondere Feinabstimmung zu erzielen.

Vorteilhafte Ausgestaltungen und Weiterbildungen des Erfindungsgegenstandes sind in den Unteransprüchen angegeben.

Nachstehend wird die Erfindung anhand von in der Zeichnung dargestellten Ausführungsbeispielen näher erläutert.

Es zeigen:

Figur 1 nach a bis h unterteilte Ausführungsbeispiele,

Figur 2 einen Druckgußkörper im Schnitt,

Figur 3 die Befestigungsart der Resonatoren im Druckgußkörper,

Figur 4 eine Seitenansicht auf einen Druckgußkörper mit eingesetzten Hohlraumresonatoren und

Figur 5 den Querschnitt von der Figur 3 in Richtung $\overline{CB}$.

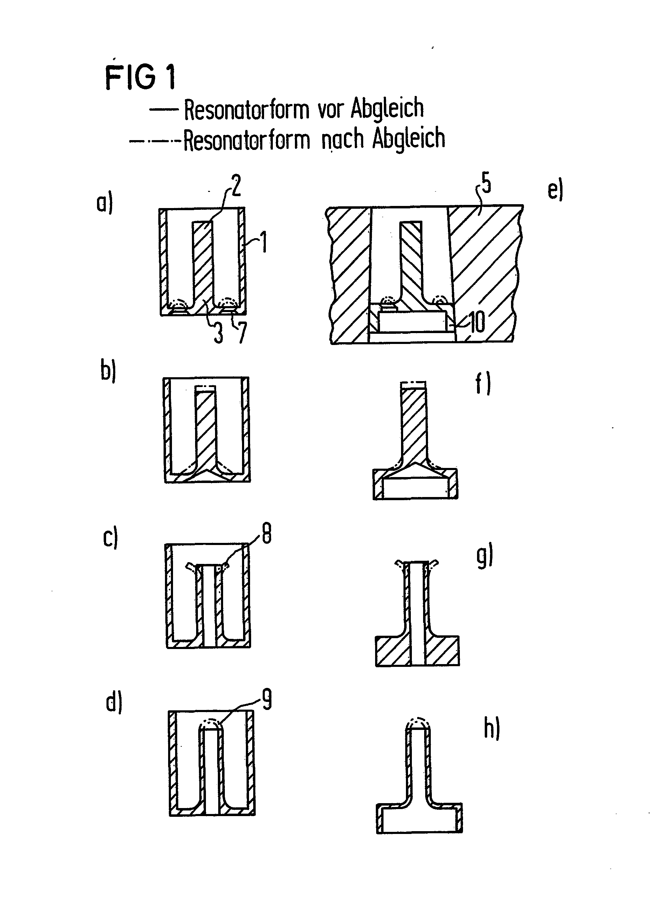

Der Koaxialresonator 1 besteht aus einem Topf und einem Innenleiter 2. Der Frequenzabgleich erfolgt dabei ohne daß ein Abstimmelement in den Koaxialresonator eingebracht werden muß, allein durch eine partielle Verformung des Resonatorbodens 3 in axialer Richtung. In den Figuren ist die Resonatorform vor dem Abgleich mit durchgehenden Linien gezeichnet, während die Resonatorform nach dem Abgleich gestrichelt dargestellt ist. Ein Druckvorgang, der von außen partiell auf den Resonatorboden 3 einwirkt, ergibt ein partielles Absinken des Bodens nach innen, das in der Figur 1a mit 7 gekennzeichnet ist. Die in den

0042110
80 P 7088 E

Resonatorboden eingedrückten Buckel bewirken eine Verschiebung zur höheren Frequenz.

Nach der Figur 1b ist der Innenleiter 2 durch Druck auf
den Boden relativ zum Boden verschoben worden.

Nach der Figur 1c ist der Innenleiter 2 hohl ausgeführt.
Durch Verändern des Durchmessers des dem Boden gegenüberliegenden Endes 8 des Innenleiters 2  wird die Kapazität des Hohlraumresonators verändert.

Nach der Darstellung in der Figur 1d ist der Innenleiter
ebenfalls hohl ausgeführt. Die Kuppe 9 des Innenleiters
wird nach außen verformt. Die Wirkung entspricht der Ausführung nach Figur 1b.

Nach den Ausführungsbeispielen 1e bis 1h wird die äußere
Wandung des Hohlleiters vom Druckgußteil 5 gebildet. Der
Resonator ist bei diesen Formen so ausgebildet, daß die
Funktion des Hohlraumresonators durch den eingepreßten
Innenleiter und die Bohrung des Druckgehäuseteiles gebildet wird. Zur Befestigung im Druckgehäuseteil ist ein
Bund 10 vorgesehen. Der Abgleich bei dem Ausführungsbeispiel 1e entspricht dem Beispiel 1a, der Abgleich 1f
wiederum 1b, der Abgleich 1g dem von 1c und der Abgleich
von 1h dem von 1d.

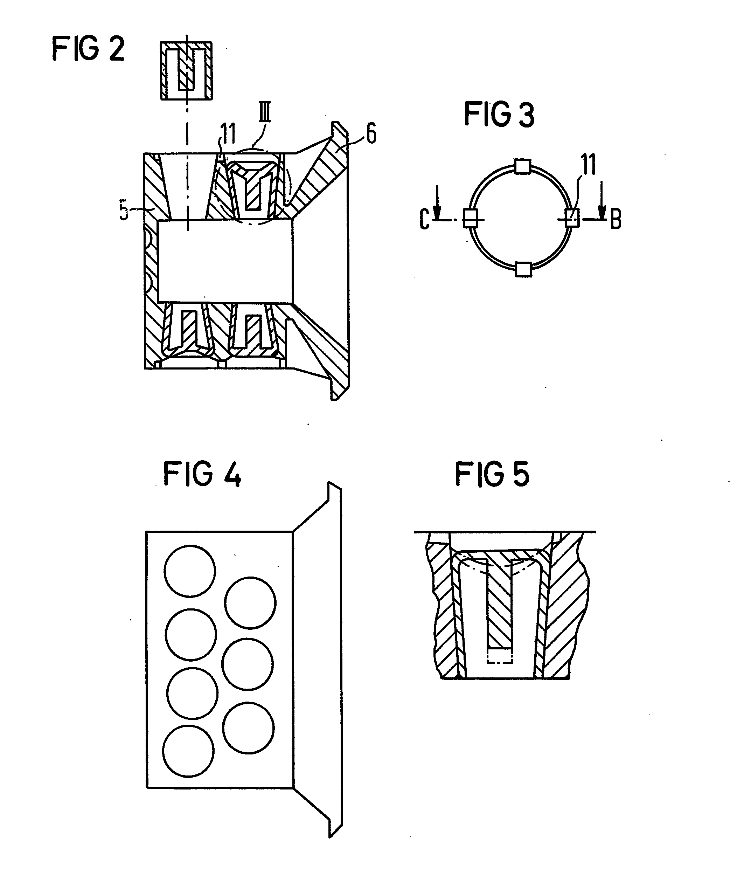

Die Figur 2 zeigt einen Druckgußkörper im Schnitt mit
drei eingesetzten Resonatoren und einem Resonator vor dem
Einsetzen. Besonders hervorgehoben ist in dieser Darstellung die leicht konische Form der Bohrungen im Druckgußteil, in die die zuerst zylindrische Resonatoren eingepreßt werden. Während des Einpreßvorganges nehmen die
Resonatoren die Form der Bohrung an. Gegenüber der Darstellung und Beschreibung in der Hauptanmeldung zur
Figur 3 kann die Antenne 6 und der Rechteckhohlleiter 5
aus einem Teil bestehen.

0042110
80 P 7 0 8 8 E

Die Figur 3 zeigt die Sicherung der Resonatoren gegen Lösen aus der Bohrung des Druckgußteiles durch Befestigungsniete 11, die dadurch entstehen, daß der Rand der Bohrung im Druckgußteil an mehreren Stellen noch immer verformt wird.

In der Figur 4 ist eine Seitenansicht auf einen Druckgußkörper mit eingesetzten Hohlraumresonatoren wiedergegeben.

Die Figur 5 zeigt den Querschnitt von der Figur 3 in Richtung der Pfeile $\overline{CB}$. Dieses Teil ist in der Figur 2 mit A gekennzeichnet.

5 Patentansprüche
5 Figuren

Patentansprüche.

1. Antwortgerät für ein System zum selbsttätigen drahtlosen Übertragen von mehrstelligen numerischen Informationen zwischen gegeneinander bewegbaren aktiven Abfrage- und passiven Antwortgeräten nach Patent ... (P 28 55 721), bei dem der Resonatorboden der Resonatoren, beispielsweise Koaxialresonatoren, über eine äußere Krafteinwirkung in axialer Richtung nach innen oder außen verformbar ist, d a d u r c h  g e k e n n - z e i c h n e t ,  daß der Resonatorboden (3) partiell (buckelförmig oder auch als Kreisring) nach innen oder außen verformt wird.

2. Antwortgerät nach Anspruch 1, d a d u r c h  g e - k e n n z e i c h n e t ,  daß die Seitenwand und/oder der Innenleiter (2) der Resonatoren (1) verformbar ist.

3. Antwortgerät nach Anspruch 1 und 2, d a d u r c h  g e k e n n z e i c h n e t ,  daß der Innenleiter (2) hohl ist und die Kuppe des Innenleiters (9) nach außen verformbar ist.

4. Antwortgerät nach den bisherigen Ansprüche, d a - d u r c h  g e k e n n z e i c h n e t ,  daß die Resonatoren (1) in einem Druckgußkörper, der den Rechteckhohlleiter (5) und die Antenne (6) bildet, eingepreßt sind.

5. Antwortgerät nach den bisherigen Patentansprüchen, d a d u r c h  g e k e n n z e i c h n e t ,  daß die Resonatoren (1) in einem Fließpreßverfahren hergestellt sind.

FIG 1

— Resonatorform vor Abgleich
—·—·—Resonatorform nach Abgleich

a)

b)

c)

d)

e)

f)

g)

h)

FIG 2

FIG 3

FIG 4

FIG 5

Europäisches
Patentamt

**EUROPÄISCHER RECHERCHENBERICHT**

0042110

Nummer der Anmeldung

EP 81 10 4279

| | **EINSCHLÄGIGE DOKUMENTE** | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | G 01 S 13/02<br>B 61 L 25/04 |
| | <u>US - A - 2 286 408</u> (C.W. HANSELL)<br><br>* Seite 1, rechte Spalte, Zeile 60 - Seite 2, rechte Spalte, Zeile 21; Figuren 1-3 *<br><br>-- | 1,3 | |
| | <u>DE - A - 2 644 233</u> (SIEMENS A.G.)<br><br>* Seite 4, Zeile 32 - Seite 5, Zeile 13; Figuren 1,2 *<br><br>---- | 1 | |

| | |
|---|---|
| | RECHERCHIERTE SACHGEBIETE (Int. Cl.³) |
| | G 01 S<br>B 61 L |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 14-07-1981 | MARCHAU |

EPA form 1503.1   06.78